# EUROPÄISCHE PATENTSCHRIFT

(11) **EP 4 082 945 B1**
(45) Veröffentlichungstag und Bekanntmachung des Hinweises auf die Patenterteilung: **02.07.2025**
(21) Anmeldenummer: 22169406.0
(22) Anmeldetag: 22.04.2022
(51) Int. Cl.: B65G 19/12, B65G 19/14, B65G 19/28

(54) **AUFLÖSEEINHEIT UND VERFAHREN ZUM AUFLÖSEN VON SCHÜTTGUT**
DISINTEGRATION DEVICE AND METHOD FOR DISINTEGRATING PIECE GOODS
UNITÉ DE DISSOLUTION ET PROCÉDÉ DE DISSOLUTION DES MATIÈRES EN VRAC

(30) Priorität: 23.04.2021 AT 503082021
(43) Veröffentlichungstag der Anmeldung: 02.11.2022
(73) Patentinhaber: Schauer Agrotronic GmbH, 4731 Prambachkirchen (AT)
(72) Erfinder: LEßLHUMER, Erwin, 4730 Prambachkirchen (AT)
(74) Vertreter: Ofner, Clemens

(56) Entgegenhaltungen:
- EP-A1- 2 191 712
- DE-A1- 2 739 737
- JP-A- 2001 225 936
- JP-A- 2004 307 090
- JP-U- S57 196 012

## Beschreibung

Die Erfindung betrifft eine Auflöseeinheit und ein Verfahren zum Auflösen einer in einer Wirrlage befindlichen Gesamtmenge von Schüttgut in Teilmengen.

Es werden oftmals Schüttgüter, wie z.B. gemulchtes oder gehäckseltes Gut, verkürztes Stroh oder Heu, in einem Depot in sehr großen Mengen bevorratet und sollen dann für deren Verwendung an den Einsatzort verbracht werden. Dazu werden die unterschiedlichsten Fördermechanismen eingesetzt, wobei das jeweilige Schüttgut in kleinere Transportmengen aufgelöst, aufgeteilt oder aufgetrennt wird. Je nach Art und Zusammenhalt des Schüttgutes kann es beim Auflösen oder Unterteilen desselben zu Verstopfungen oder einem Verlegen kommen.

Aus der EP 2 191 712 A1 ist ein Silagewagen bekannt geworden, bei welchem ein zu zerkleinerndes Gut von Kratzförderern zu Zerkleinerungswalzen transportiert wird. Von den Zerkleinerungswalzen zerkleinertes Gut fällt auf Förderschnecken, die das Gut zu einem Vorbeschleunigungsgebläse, welches die Silage zu einem Auswurfrotorgebläse schleudert. Weitere Vorrichtung zum Befördern von Biomasseschüttgut oder zumindest von Stückgut sind aus der JP 2001 225 936 A, der JP 2004 307 090 A und der JP S 57 196 012 U bekannt geworden. Aus der DE 2 739 737 A1 ist weiters eine Vorrichtung zum Fördern von Klärschlamm bekannt geworden. EP2191712A1 offenbart eine Auflöseeinheit gemäß dem Oberbegriff des Anspruchs 1 und ein Verfahren gemäß dem Oberbegriff des Anspruchs 13.

Aufgabe der vorliegenden Erfindung war es, eine Auflöseeinheit und ein Verfahren zum Auflösen einer in einer Wirrlage befindlichen Gesamtmenge von Schüttgut zu schaffen, mittels derer ein störungsfreier Auflösevorgang des Schüttgutes in Teilmengen möglich ist und dabei Verstopfungen des Schüttgutes in der Auflöseeinheit vermieden werden.

Diese Aufgabe wird durch eine Auflöseeinheit und ein Verfahren gemäß den Ansprüchen gelöst.

Die erfindungsgemäße Auflöseeinheit ist zum Auflösen einer in einer Wirrlage befindlichen Gesamtmenge von Schüttgut, insbesondere von gemulchtem oder gehäckseltem Gut, verkürztem Stroh oder Heu, in dazu kleinere Teilmengen vorgesehen. Die Auflöseeinheit umfasst
- eine Aufnahmevorrichtung, welche Aufnahmevorrichtung schachtförmig oder trichterförmig ausgebildet ist und einen Zufuhrbereich und einen bodenseitig befindlichen Abfuhrbereich definiert,
- einen ersten Fördermechanismus, welcher erste Fördermechanismus im Abfuhrbereich angeordnet ist und zumindest ein endlos umlaufendes Förderorgan mit daran angeordneten Förderelementen umfasst, wobei das zumindest eine Förderorgan jeweils an einem ersten Kopfendbereich an einer ersten Umlenkvorrichtung mit einer ersten Umlenkachse und einem in Förderrichtung beabstandet angeordneten zweiten Kopfendbereich an einer zweiten Umlenkvorrichtung mit einer zweiten Umlenkachse umgelenkt ist, wobei zumindest eine der Umlenkvorrichtungen mit einer Antriebsvorrichtung in Antriebsverbindung steht, und das zumindest eine Förderorgan einen oberen Trum und einen unteren Trum ausbildet, und weiters von den Förderelementen außenseitig eine umlaufend ausgebildete Umhüllende mit einer Förderbreite definiert ist,
- ein erstes Fördergehäuse, welches erste Fördergehäuse im ersten Kopfendbereich angeordnet ist und die erste Umlenkvorrichtung abdeckt,
- ein zweites Fördergehäuse, welches zweite Fördergehäuse im zweiten Kopfendbereich angeordnet ist und die zweite Umlenkvorrichtung abdeckt,
- einen zweiten Fördermechanismus, welcher zweite Fördermechanismus im zweiten Kopfendbereich angeordnet ist und sich zumindest entlang der Förderbreite erstreckt,
- wobei der zweite Fördermechanismus innerhalb des zweiten Fördergehäuses aufgenommen und angeordnet ist und in einem Bereich unterhalb der zweiten Umlenkachse der zweiten Umlenkvorrichtung sowie außerhalb der von den Förderelementen außenseitig definierten Umhüllenden angeordnet ist, und wobei zwischen dem ersten Fördermechanismus und dem zweiten Fördermechanismus ein Übergabebereich definiert ist, und
- ein Stützelement, welches Stützelement unterhalb des unteren Trums des zumindest einen endlos umlaufenden Förderorgans angeordnet ist und sich zwischen dem ersten Fördergehäuse und dem zweiten Fördergehäuse erstreckt und dabei einen sich zwischen den beiden Kopfendbereichen erstreckenden Rückförderabschnitt definiert.

Der dadurch erzielte Vorteil liegt darin, dass so einzelne Teilmengen aus dem bodenseitigen Abfuhrbereich der Aufnahmevorrichtung vom ersten Fördermechanismus abgefördert werden und im Übergabebereich an den zweiten Fördermechanismus zum Weitertransport übergeben werden und von diesem eine Fördermenge je Zeiteinheit weggefördert wird. Durch das Vorsehen des Stützelements und dessen Anordnung unterhalb des ersten Fördermechanismus wird ein eigener und zusätzlicher Rückförderabschnitt ausgebildet. Sollten die pro Zeiteinheit von der Aufnahmevorrichtung zugeförderten Teilmengen des Schüttgutes größer als jene pro Zeiteinheit weggeförderte Fördermenge sein, wird die überschüssige und zu Verstopfungen führende Differenzmenge von den unterhalb des ersten Fördermechanismus befindlichen und vorragenden Förderelementen im Rückförderabschnitt zuerst in den ersten Kopfendbereich und dann in den Abfuhrbereich der Aufnahmevorrichtung zurück gefördert. Damit wird im Übergabebereich eine Überschussmenge des Schüttgutes sicher weg transportiert und so Verstopfungen vermieden. Damit wird ein über eine längere Zeit andauernder störungsfreier Betrieb der Auflöseeinheit erreicht.

Weiters kann es vorteilhaft sein, wenn der zweite Fördermechanismus zumindest entlang der Förderbreite eine parallele Ausrichtung bezüglich der zweiten Umlenkachse aufweist. Damit kann über die gesamte Längserstreckung eine sehr konstante Befüllung des zweiten Fördermechanismus erzielt werden.

Erfindungsgemäß wird vorgesehen, dass der zweite Fördermechanismus in einem trogförmig ausgebildeten Gehäuseabschnitt des zweiten Fördergehäuses aufgenommen ist. So kann auf der nach oben hin offenen Seite eine sichere Befüllung und bodenseitig eine gute Abstützwirkung und Längsführung erzielt werden.

Eine weitere mögliche Ausführungsform hat die Merkmale, dass der trogförmig ausgebildete Gehäuseabschnitt mit einer Vielzahl von Durchbrüchen versehen ist und die Durchbrüche in einen Absaugkanal einmünden und der Absaugkanal mit einer Absaugvorrichtung in Strömungsverbindung steht. Durch das Vorsehen der Durchbrüche kann je nach gewählter Querschnittsgröße der Durchtritt von Kleinpartikel, wie Staub, ermöglicht werden. Damit kann eine Abtrennung ermöglicht werden und im Abgabebereich des Schüttgutes die Staubentwicklung verringert oder nahezu verhindert werden.

Eine weitere Ausbildung sieht vor, dass das erste Fördergehäuse und das zweite Fördergehäuse jeweils außenseitig und seitlich abstehend an den bodenseitig befindlichen Abfuhrbereich der schachtförmig oder trichterförmig ausgebildeten Aufnahmevorrichtung angeordnet sind. Damit steht die gesamte Fläche des Abfuhrbereichs zur Bildung der einzelnen Teilmengen zur Verfügung. Das in der Aufnahmevorrichtung befindliche Schüttgut kann so keine Gewichtskraft auf die in den jeweiligen Fördergehäusen befindlichen Umlenkvorrichtungen ausüben.

Eine andere Ausführungsform zeichnet sich dadurch aus, dass ein Schieberelement vorgesehen ist, welches Schieberelement im Abfuhrbereich aus der Aufnahmevorrichtung in den zweiten Kopfendbereich oberhalb des oberen Trums des zumindest einen endlos umlaufenden Förderorgans angeordnet ist und zur Einstellung eines lichten Durchtrittsquerschnitts in seiner Position bedarfsweise relativ bezüglich des oberen Trums verstellbar ist. Damit kann je nach Konsistenz des Schüttgutes das Ausmaß der jeweiligen Teilmengen in gewissen Grenzen vorbestimmt und eingestellt werden.

Eine weitere bevorzugte Ausführungsform ist dadurch gekennzeichnet, dass der erste Fördermechanismus zumindest zwei umlaufende Förderorgane umfasst, welche in Richtung der Förderbreite voneinander beabstandet angeordnet sind. Durch das Vorsehen von mehreren Förderorganen kann eine über die Förderbreite gesehen gleichmäßigere Zugkrafteinleitung auf die jeweiligen daran angeordneten und befestigten Förderelementen erzielt werden.

Weiters kann es vorteilhaft sein, wenn die Förderelemente insbesondere stabförmig ausgebildet sind und sich durchgehend über die Förderbreite erstrecken. So kann über die gesamte Förderbreite eine sichere Transportwirkung erzielt werden.

Eine andere alternative Ausführungsform zeichnet sich dadurch aus, dass die insbesondere stabförmig ausgebildeten Förderelemente auf einer tischartig ausgebildeten Stützeinheit abgestützt sind und jedes der umlaufenden Förderorgane jeweils in einem in der Stützeinheit angeordneten oder ausgebildeten Kanal oder in einem Schlitz aufgenommen ist. Damit kann die Eigenmasse des in der Aufnahmevorrichtung aufgenommen Schüttgutes auf die Stützeinheit abgetragen werden und die Förderorgane werden damit dieser Belastung nicht ausgesetzt.

Weiters kann es vorteilhaft sein, wenn eine Befüllvorrichtung vorgesehen ist, welche Befüllvorrichtung im Übergabebereich des zweiten Kopfendbereichs sowie oberhalb des zweiten Fördermechanismus angeordnet ist. Mittels der zusätzlichen Befüllvorrichtung wird es möglich, einen noch sichereren Abtransport des Schüttguts aus dem Übergabebereich erzielen zu können und den Füllgrad des zweiten Fördermechanismus zu verbessern. Dies insbesondere bei sperrigerem und festem Schüttgut.

Eine weitere bevorzugte Ausführungsform ist dadurch gekennzeichnet, dass die Befüllvorrichtung in Förderrichtung des zweiten Fördermechanismus gesehen seitlich neben der zweiten Umlenkvorrichtung angeordnet ist. Damit kann eine eigene und unabhängige Befüllung des zweiten Fördermechanismus und damit verbunden auch eine bessere Förderkapazität durch die Erhöhung des Füllgrades erzielt werden.

Eine weitere mögliche Ausführungsform hat die Merkmale, dass die Befüllvorrichtung zumindest einen drehbar gelagerten Wälzkörper umfasst und der Wälzkörper mit einem Antriebsmittel in Antriebsverbindung steht. Damit kann der Füllgrad des zweiten Fördermechanismus erhöht und das sichere Wegfördern des Schüttguts noch verbessert werden.

Eine weitere mögliche und gegebenenfalls alternative Ausführungsform hat die Merkmale, dass der zweite Fördermechanismus aus der Gruppe von Schneckenförderer, Rohrförderer, Rohrkettenförderer oder Rohrseilförderer ausgewählt ist. Damit kann die Auflöseeinheit an das jeweilige aufzulösende Schüttgut bedarfsweise angepasst werden.

Die Aufgabe der Erfindung wird aber unabhängig davon auch durch ein Verfahren gemäß Anspruch 13 zum Auflösen einer in einer Wirrlage befindlichen Gesamtmenge von Schüttgut gelöst, bei welchem folgende Schritte durchgeführt werden
- Bereitstellen des aufzulösenden Schüttgutes,
- Bereitstellen einer Aufnahmevorrichtung, welche Aufnahmevorrichtung schachtförmig oder trichterförmig ausgebildet ist und von dieser ein Zufuhrbereich und ein bodenseitig befindlicher Abfuhrbereich definiert wird,
- Bereitstellen eines ersten Fördermechanismus, welcher erste Fördermechanismus im Abfuhrbereich angeordnet ist und zumindest ein endlos umlaufendes Förderorgan mit daran angeordneten Förderelementen umfasst, wobei das zumindest eine Förderorgan jeweils an einem ersten Kopfendbereich an einer ersten Umlenkvorrichtung mit einer ersten Umlenkachse und einem in Förderrichtung beabstandet angeordneten zweiten Kopfendbereich an einer zweiten Umlenkvorrichtung mit einer zweiten Umlenkachse umgelenkt wird, wobei zumindest eine der Umlenkvorrichtungen von einer Antriebsvorrichtung angetrieben wird, und vom zumindest einen Förderorgan ein oberer Trum und ein unterer Trum definiert wird, und weiters von den Förderelementen außenseitig eine umlaufend ausgebildete Umhüllende mit einer Förderbreite definiert wird,
- Bereitstellen eines ersten Fördergehäuses, welches erste Fördergehäuse im ersten Kopfendbereich angeordnet wird und von diesem die erste Umlenkvorrichtung abdeckt wird,
- Bereitstellen eines zweiten Fördergehäuses, welches zweite Fördergehäuse im zweiten Kopfendbereich angeordnet wird und von diesem die zweite Umlenkvorrichtung abdeckt wird,
- Bereitstellen eines zweiten Fördermechanismus, welcher zweite Fördermechanismus im zweiten Kopfendbereich angeordnet wird und sich zumindest entlang der Förderbreite erstreckt,
- wobei der zweite Fördermechanismus innerhalb des zweiten Fördergehäuses aufgenommen und angeordnet wird und in einem Bereich unterhalb der zweiten Umlenkachse der zweiten Umlenkvorrichtung sowie außerhalb der von den Förderelementen außenseitig definierten Umhüllenden angeordnet wird, und wobei zwischen dem ersten Fördermechanismus und dem zweiten Fördermechanismus ein Übergabebereich definiert wird, und
- Bereitstellen eines Stützelements, welches Stützelement unterhalb des unteren Trums des zumindest einen endlos umlaufenden Förderorgans angeordnet wird und sich zwischen dem ersten Fördergehäuse und dem zweiten Fördergehäuse erstreckt und von diesem ein sich zwischen den beiden Kopfendbereichen erstreckender Rückförderabschnitt definiert wird,
- Zuführen der Gesamtmenge des auflösenden Schüttgutes in die Aufnahmevorrichtung bis hin in deren Abfuhrbereich,
- Zufördern der einzelnen Teilmengen des Schüttgutes mittels des ersten Fördermechanismus aus dem Abfuhrbereich hin in den zweiten Kopfendbereich und Übergeben der einzelnen Teilmengen des Schüttgutes im Übergabebereich an den zweiten Fördermechanismus, und
- Wegfördern einer Fördermenge des übergebenen Schüttgutes mittels des zweiten Fördermechanismus aus dem Übergabebereich an eine Abgabestelle.

Vorteilhaft ist bei den hier gewählten Verfahrensschritten, dass so einzelne Teilmengen aus dem bodenseitigen Abfuhrbereich der Aufnahmevorrichtung vom ersten Fördermechanismus abgefördert werden und im Übergabebereich an den zweiten Fördermechanismus zum Weitertransport übergeben werden und von diesem eine Fördermenge je Zeiteinheit weggefördert wird. Durch das Vorsehen des Stützelements und dessen Anordnung unterhalb des ersten Fördermechanismus wird ein eigener und zusätzlicher Rückförderabschnitt ausgebildet. Sollten die pro Zeiteinheit von der Aufnahmevorrichtung zugeförderten Teilmengen des Schüttgutes größer als jene pro Zeiteinheit weggeförderte Fördermenge sein, wird die überschüssige und zu Verstopfungen führende Differenzmenge von den unterhalb des ersten Fördermechanismus befindlichen und vorragenden Förderelementen im Rückförderabschnitt zuerst in den ersten Kopfendbereich und dann in den Abfuhrbereich der Aufnahmevorrichtung zurück gefördert. Damit wird im Übergabebereich eine Überschussmenge des Schüttgutes sicher weg transportiert und so Verstopfungen vermieden. Damit wird ein über eine längere Zeit andauernder störungsfreier Betrieb der Auflöseeinheit erreicht.

Weiters ist ein Vorgehen vorteilhaft, bei dem das Zufördern der einzelnen Teilmengen des Schüttgutes kontinuierlich oder diskontinuierlich durchgeführt wird. Damit kann je nach Wahl der Betriebsart eine noch bessere Abstimmung auf das aufzulösende Schüttgut ermöglicht werden.

Eine weitere vorteilhafte Vorgehensweise ist dadurch gekennzeichnet, dass das Wegfördern der Fördermenge des übergebenen Schüttgutes kontinuierlich oder diskontinuierlich durchgeführt wird. So kann die Menge je Zeiteinheit individueller eingestellt und festgelegt werden.

Vorteilhaft ist auch eine Verfahrensvariante, bei welcher bei einem Unterschreiten der weggeförderten Fördermenge bezüglich der in gleicher Zeiteinheit zugeförderten Teilmengen eine im Übergabebereich verbliebene Differenzmenge des Schüttgutes mittels der am zumindest einen umlaufenden Förderorgan angeordneten Förderelemente entlang des Rückförderabschnitts hin zum ersten Kopfendbereich und weiter in den Abfuhrbereich der Aufnahmevorrichtung zurückgefördert wird. So kann das überschüssige und nicht vom zweiten Fördermechanismus abtransportierte Schüttgut aus dem Übergabebereich weg und zurück in die Aufnahmevorrichtung gefördert werden. Dies mit demselben ersten Fördermechanismus und es sind dazu keine zusätzlichen Förderer oder andere Maßnahmen vorzusehen.

Eine andere Vorgehensweise zeichnet sich dadurch aus, wenn der zweite Fördermechanismus in einem trogförmig ausgebildeten Gehäuseabschnitt des zweiten Fördergehäuses aufgenommen wird und der trogförmig ausgebildete Gehäuseabschnitt mit einer Vielzahl von Durchbrüchen versehen ist und dass die Durchbrüche in einen mit einer Absaugvorrichtung in Strömungsverbindung stehenden Absaugkanal einmünden und dass mittels der Absaugvorrichtung jene durch die Durchbrüche in den Absaugkanal gelangten Partikel des Schüttgutes abgesaugt werden. So kann auf der nach oben hin offenen Seite eine sichere Befüllung und bodenseitig eine gute Abstützwirkung und Längsführung erzielt werden. Weiters kann durch das Vorsehen der Durchbrüche je nach gewählter Querschnittsgröße der Durchtritt von Kleinpartikel, wie Staub, ermöglicht werden. Damit kann eine Abtrennung ermöglicht werden und im Abgabebereich des Schüttgutes die Staubentwicklung verringert oder nahezu verhindert werden.

Eine weitere vorteilhafte Vorgehensweise ist dadurch gekennzeichnet, dass eine Befüllvorrichtung bereitgestellt, welche Befüllvorrichtung im Übergabebereich des zweiten Kopfendbereichs sowie oberhalb des zweiten Fördermechanismus angeordnet wird. Mittels der zusätzlichen Befüllvorrichtung wird es möglich, einen noch sichereren Abtransport des Schüttguts aus dem Übergabebereich erzielen zu können und den Füllgrad des zweiten Fördermechanismus zu verbessern. Dies insbesondere bei sperrigerem und festem Schüttgut.

Schließlich zeichnet sich eine andere Vorgehensweise dadurch aus, wenn die Befüllvorrichtung in Förderrichtung des zweiten Fördermechanismus gesehen seitlich neben der zweiten Umlenkvorrichtung angeordnet wird und mittels der Befüllvorrichtung der zweite Fördermechanismus mit den im Übergabebereich befindlichen Teilmengen des Schüttguts zum Wegfördern aus dem Übergabebereich befüllt wird. Damit kann eine eigene und unabhängige Befüllung des zweiten Fördermechanismus und damit verbunden auch eine bessere Förderkapazität durch die Erhöhung des Füllgrades erzielt werden. Weiters kann so auch noch der Füllgrad des zweiten Fördermechanismus erhöht und das sichere Wegfördern des Schüttguts verbessert werden.

Zum besseren Verständnis der Erfindung wird diese anhand der nachfolgenden Figuren näher erläutert.

Es zeigen jeweils in stark vereinfachter, schematischer Darstellung:
- Fig. 1: die Auflöseeinheit in Draufsicht;
- Fig. 2: die Auflöseeinheit nach Fig. 1 im Schnitt gemäß den Linien II-II in Fig. 1;
- Fig. 3: die Auflöseeinheit nach den Fig. 1 und 2, in Ansicht geschnitten gemäß den Linien III-III in Fig. 2.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

Unter dem Begriff des Schüttgutes sind zumindest folgende Güter zu verstehen, welche nachfolgend als Beispiele dafür angegeben sind. Dabei kann es sich unter anderem um gemulchtes oder gehäckseltes Gut sowie auch um verkürztes Stroh oder Heu handeln. Die Einzelstücklänge oder Halmlänge kann dabei bis zu ca. 250 mm betragen.

Die allgemein als Schüttgut bezeichneten Stoffe können eine kleinstückige Körperform als Stückgut und/oder aber auch eine faserförmige oder stielförmige Körperform aufweisen. Je nach Feuchtigkeitsgrad kann das jeweilige Schüttgut auch zur Klumpenbildung mit einem gewissen inneren Zusammenhalt neigen. Bei den allgemein als Schüttgut bezeichneten Stoffen handelt es sich bevorzugt oder ausschließlich um organisches Material. Dieses weist in Abhängigkeit von seiner Stück- oder Körpergröße eine gewisse Rieselfähigkeit auf.

Weiters wird nachfolgend unter dem gewählten Begriff des "Auflösens" verstanden, dass jeweils Teilmengen von der Gesamtmenge des körperlichen Schüttgutes abgetrennt und weggefördert werden. Die jeweiligen Mengen stellen pro Zeiteinheit entweder ein Volumen oder eine Masse dar. Das "Auflösen" betrifft jedoch nicht den Vorgang, dass ein Feststoff in einer Flüssigkeit aufgelöst wird, wie dies z.B. von Zucker oder einer Tablette in Wasser erfolgt.

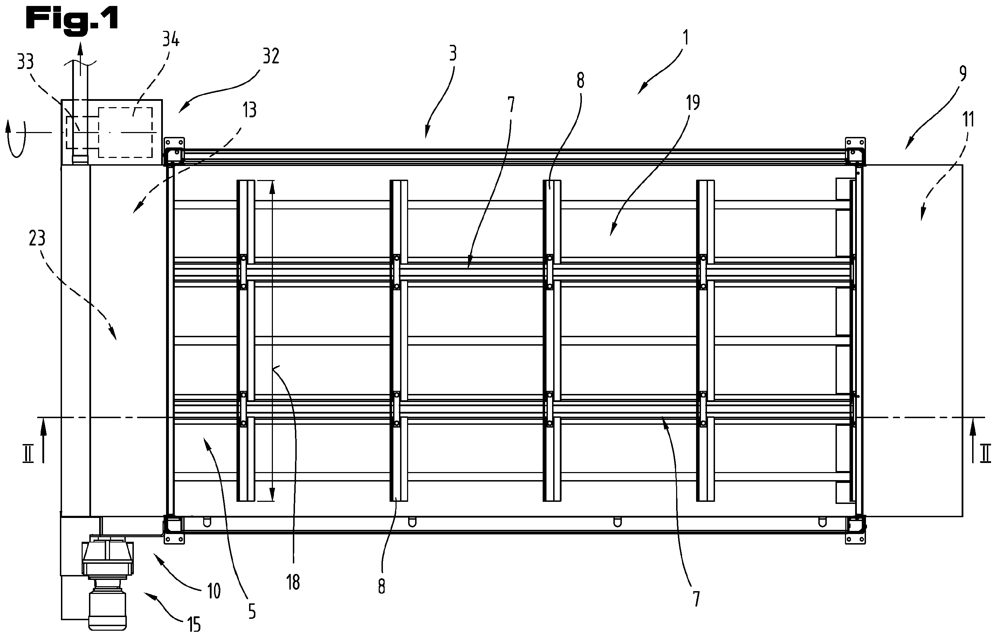

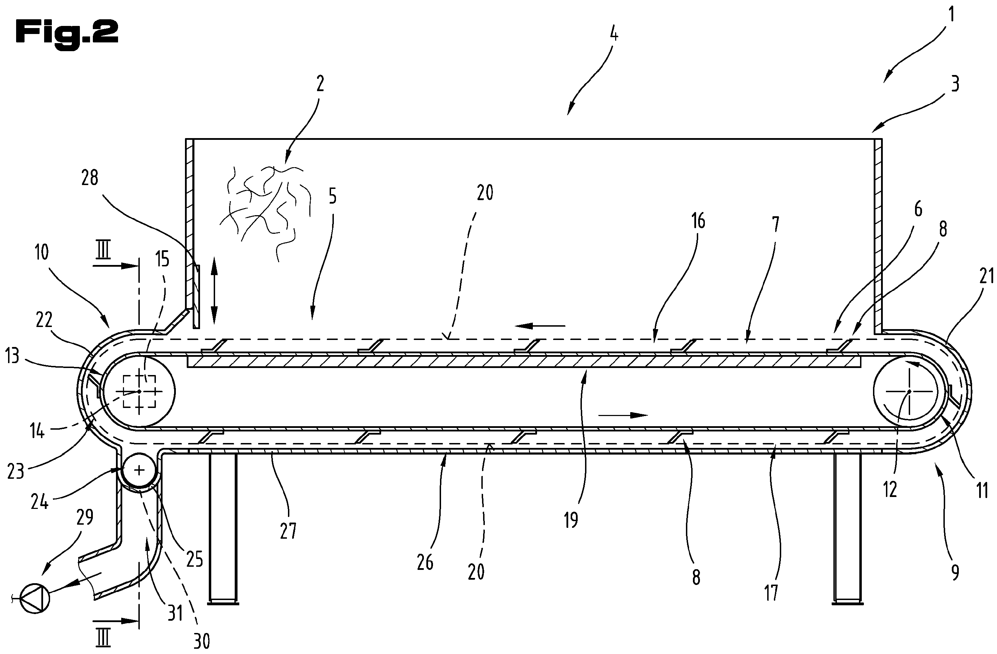

In den Fig. 1 bis 3 ist eine derartige Auflöseeinheit 1 in stilisierter Darstellung gezeigt, mittels welcher ein dieser zugeführtes Schüttgut 2 ausgehend von einer in einer Wirrlage befindliche Gesamtmenge des Schüttgutes 2 auf mehrere dazu kleinere Teilmengen aufgeteilt oder unterteilt werden kann oder wird. Der besseren Übersichtlichkeit halber ist in der Fig. 2 das Schüttgut 2 nur in einer sehr geringen Menge angedeutet.

Zur Aufnahme des Schüttgutes 2 ist eine Aufnahmevorrichtung 3 vorgesehen, welche auch als Zufuhrvorrichtung bezeichnet werden kann. Die Aufnahmevorrichtung 3 ist zumeist schachtförmig oder trichterförmig ausgebildet und weist zumeist umlaufend angeordnete Begrenzungswände auf. Weiters definiert die Aufnahmevorrichtung 3 einen zumeist offen ausgebildeten Zufuhrbereich 4 und einen in der normalen Gebrauchsstellung bodenseitig befindlichen Abfuhrbereich 5.

Das im Aufnahmeraum der Aufnahmevorrichtung 3 befindliche Schüttgut 2 wird zumeist beim Einbringen selbsttätig bis in den Abfuhrbereich 5 hin verlagert. Im Abfuhrbereich 5 und zumeist unterhalb der Aufnahmevorrichtung 3 ist ein erster Fördermechanismus 6 vorgesehen oder angeordnet, welcher zumindest ein endlos umlaufendes Förderorgan 7 mit mehreren in Förderrichtung hintereinander und voneinander beabstandet daran angeordneten Förderelementen 8 umfasst. Das zumindest eine Förderorgan 7 ist jeweils an einem ersten Kopfendbereich 9 und an einem in Förderrichtung davon beabstandet angeordneten zweiten Kopfendbereich 10 umgelenkt. Dazu ist im ersten Kopfendbereich 9 eine erste Umlenkvorrichtung 11 vorgesehen, welche um eine erste Umlenkachse 12 drehbar gelagert ist. Im zweiten Kopfendbereich 10 ist eine zweite Umlenkvorrichtung 13 vorgesehen, welche ihrerseits um eine zweite Umlenkachse 14 drehbar gelagert ist.

In bekannter Weise ist das zumindest eine Förderorgan 7 an den beiden Umlenkvorrichtungen 11, 13 umgelenkt. Zum Antrieb des zumindest einen Förderorgans 7 steht zumindest eine der Umlenkvorrichtungen 11, 13 mit einer Antriebsvorrichtung 15 in Antriebsverbindung. Das zumindest eine Förderorgan 7 definiert weiters einen oberen Trum 16 und einen unteren Trum 17 bezogen auf die übliche Arbeits- oder Einsatzstellung.

Die Förderelemente 8 sind zumeist stabförmig ausgebildet, wobei die unterschiedlichsten Querschnittsformen je nach Art des Schüttgutes 2 eingesetzt werden können. Dabei kann es sich um ein Winkelprofil, ein Rechteckprofil oder dergleichen handeln. Das Förderelement 8 kann in Querrichtung bezüglich der Förderrichtung in der Förderebene durchgängig und/oder aber auch unterbrochen ausgebildet sein. Randseitig definiert das Förderelement 8 oder definieren die in Querrichtung hintereinander angeordneten Förderelemente 8 jeweils eine Förderbreite 18. Diese entspricht in etwa einer Breite der Aufnahmevorrichtung 3 in deren Abfuhrbereich 5 in Querrichtung bezüglich der Förderrichtung.

Das Förderorgan 7 selbst kann z.B. bandförmig ausgebildet sein. Es kann aber auch vorgesehen sein, dass der erste Fördermechanismus 6 zumindest zwei umlaufende Förderorgane 7 umfasst, welche in Richtung der Förderbreite 18 voneinander beabstandet angeordnet sind. Zumeist werden die Förderorgane 7 in Form von Ketten, Zahnriemen oder dergleichen ausgebildet. Bei dieser Ausführungsform der Förderorgane 7 können die bevorzugt jeweils durchgängig ausgebildeten Förderelemente 8 an einer tischartig ausgebildeten Stützeinheit 19 abgestützt sein. Weiters ist dazu für jedes der umlaufenden Förderorgane 7 jeweils ein nicht näher bezeichneter Kanal oder ein Schlitz in der Stützeinheit 19 vorzusehen, in welchem das jeweilige Förderorgan 7 angeordnet oder aufgenommen ist. Die Kanäle oder Schlitze erstrecken sich zwischen den beiden Kopfendbereichen 9 und 10 durchgängig.

Da die einzelnen Förderelemente 8 von dem Förderorgan 7 abstehend angeordnet sind, wird von diesen eine gedachte Umhüllende 20 definiert. Die Umhüllende 20 erstreckt sich außenseitig entlang der einzelnen Förderelemente 8 über die Förderbreite 18 und in einem gleichmäßigen Abstand oberhalb des Förderorgans 7 entlang seiner Umfangserstreckung. Bei der Förderbewegung befinden sich die einzelnen Förderelemente 8 innerhalb der gedachten Umhüllenden 20 und grenzen unmittelbar an diese an.

Im ersten Kopfendbereich 9 kann ein erstes Fördergehäuse 21 vorgesehen sein, innerhalb welchem die erste Umlenkvorrichtung 11 aufgenommen und damit auf der vom zweiten Kopfendbereich 10 abgewendeten Seite bevorzugt vollständig abgedeckt ist. Gleiches gilt aber auch für den zweiten Kopfendbereich 10. Hier kann ein zweites Fördergehäuse 22 vorgesehen sein, innerhalb welchem die zweite Umlenkvorrichtung 13 aufgenommen und damit auf der vom ersten Kopfendbereich 9 abgewendeten Seite bevorzugt vollständig abgedeckt ist. Innerhalb der Fördergehäuse 21, 22 und in einem zwischen dem zumindest einen Förderorgan 7 und den daran befindlichen Förderelementen 8 ausgebildeten Freiraum kann das Schüttgut 2 eingebracht und transportiert werden. Auf eine entsprechende Dichtheit ist Bedacht zu nehmen. Wie insbesondere aus einer Zusammenschau der Fig. 1 und 2 zu ersehen ist, kann das erste Fördergehäuse 21 und/oder das zweite Fördergehäuse 22 jeweils außenseitig und seitlich abstehend an den bodenseitig befindlichen Abfuhrbereich 5 der schachtförmig oder trichterförmig ausgebildeten Aufnahmevorrichtung 3 angeordnet sein.

Mittels der am Förderorgan 7 befindlichen Förderelemente 8 wird von jedem derselben jeweils eine Teilmenge von der Gesamtmenge des Schüttgutes 2 aufgelöst oder davon abgetrennt und in Richtung zu der zweiten Umlenkvorrichtung 13 hin gefördert und es befinden sich die jeweiligen Teilmengen des Schüttgutes 2 damit innerhalb des zweiten Fördergehäuses 22. Die Teilmengen kommen unter anderem dadurch zustande, dass von jedem der Förderelemente 8 ein Anteil des in der Aufnahmevorrichtung 3 befindlichen Schüttgutes 2 davon aufgelöst oder abgetrennt wird und in den jeweiligen Zwischenabschnitten zwischen unmittelbar hintereinander angeordneten Förderelementen 8 in einen im zweiten Kopfendbereich 10 befindlichen Übergabebereich 23 transportiert oder gefördert werden.

Die einzelnen Teilmengen des Schüttgutes 2 werden in dem Übergabebereich 23 an einen zweiten Fördermechanismus 24 übergeben und können von diesem zu einer nicht näher dargestellten Abgabestelle weiter transportiert werden. Der zweite Fördermechanismus 24 befindet sich im zweiten Kopfendbereich 10 und erstreckt sich zumindest entlang der Förderbreite 18. Weiters befindet sich der zweite Fördermechanismus 24 innerhalb des zweiten Fördergehäuses 22 und ist damit innerhalb desselben angeordnet oder aufgenommen.

Als mögliche Ausführungsbeispiele für den zweiten Fördermechanismus 24 sind z.B. ein Schneckenförderer, Rohrförderer, Rohrkettenförderer oder Rohrseilförderer genannt. Derartige Förderer weisen zumeist einen kreisrunden Querschnitt auf. Um die Übergabe des Schüttgutes 2 und eine sichere Aufnahme im Übergabebereich 23 zu erzielen, kann der zweite Fördermechanismus 24 in einem trogförmig ausgebildeten Gehäuseabschnitt 25 des zweiten Fördergehäuses 22 aufgenommen sein. Der zweite Fördermechanismus 24 kann weiters zumindest entlang der Förderbreite 18 eine parallele Ausrichtung bezüglich der zweiten Umlenkachse 14 aufweisen.

Die relative Anordnung des zweiten Fördermechanismus 24 im Übergabebereich 23 ist so gewählt, dass dieser in seinem Querschnitt gesehen unterhalb der zweiten Umlenkachse 14 der zweiten Umlenkvorrichtung 13 sowie außerhalb der von den Förderelementen 8 außenseitig definierten Umhüllenden 20 angeordnet ist. Das unterhalb bezieht sich weiters auf eine Horizontalebene, welche in der zweiten Umlenkachse 14 liegend angeordnet ist. Der Übergabebereich 23 befindet sich damit zwischen dem ersten Fördermechanismus 6 und dem zweiten Fördermechanismus 24.

Zur Bildung eines sogenannten Rückförderabschnitts 26 in einem Bereich unterhalb des unteren Trums 17 des Förderorgans 7 ist dazu ein bevorzugt plattenförmig ausgebildetes Stützelement 27 vorgesehen. Das Stützelement 27 erstreckt sich zwischen dem ersten Fördergehäuse 21 und dem zweiten Fördergehäuse 22 und bildet eine Art von Kanal aus. Das Wesen des Rückförderabschnitts 26 wird nachfolgend noch detaillierter beschrieben. Der Abstand zwischen jener Fläche des Stützelements 27, welche dem ersten Fördermechanismus 6 zugewendet ist, und der von den Förderelementen 8 definierten gedachten Umhüllenden 20 ist so zu wählen, dass Kollisionen vermieden jedoch eine Transportwirkung von den Förderelementen 8 auf das Schüttgut 2 ausgeübt werden kann. Es wäre auch noch möglich, das Stützelement 27 relativ verstellbar anzuordnen, um so die Kanalhöhe einstellbar auszubilden.

Um die einzelnen vom ersten Fördermechanismus 6 in den Übergabebereich 23 hin geförderten Teilmengen in einem gewissen Ausmaß vorbestimmen zu können, kann dazu zumindest ein Schieberelement 28 vorgesehen sein. Das Schieberelement 28 dient zur Mengenbegrenzung und kann im Abfuhrbereich 5 aus der Aufnahmevorrichtung 3 in den zweiten Kopfendbereich 10 oberhalb des oberen Trums 16 des zumindest einen endlos umlaufenden Förderorgans 7 angeordnet sein. Je nach Beabstandung von den Förderelementen 8 kann so der lichte Durchtrittsquerschnitts hin in den Übergabebereich 23 eingestellt werden. Dazu ist das zumindest eine Schieberelement 28 in seiner Position bedarfsweise relativ bezüglich des oberen Trums 16 verstellbar angeordnet. Die Halterung und/oder Führung kann an einer Seitenwand der Aufnahmevorrichtung 3 erfolgen.

Je nach der Konsistenz und Art des Schüttgutes 2 kann, falls in diesem zusätzlich zu den festen Bestandteilen auch noch darin enthaltener Staub oder Staubpartikel vorhanden sind, eine Absaugvorrichtung 29 vorgesehen werden. Dazu sind dann im trogförmig ausgebildeten Gehäuseabschnitt 25 des zweiten Fördergehäuses 22 eine Vielzahl von Durchbrüchen 30 vorzusehen, um so einen Durchtritt des Staubes durch die Durchbrüchen 30 hindurch zu ermöglichen. Die Durchbrüche 30 münden jeweils in einen Absaugkanal 31 ein, wobei der Absaugkanal 31 über eine nicht näher bezeichnete Leitungsverbindung mit der Absaugvorrichtung 29 in Strömungsverbindung steht.

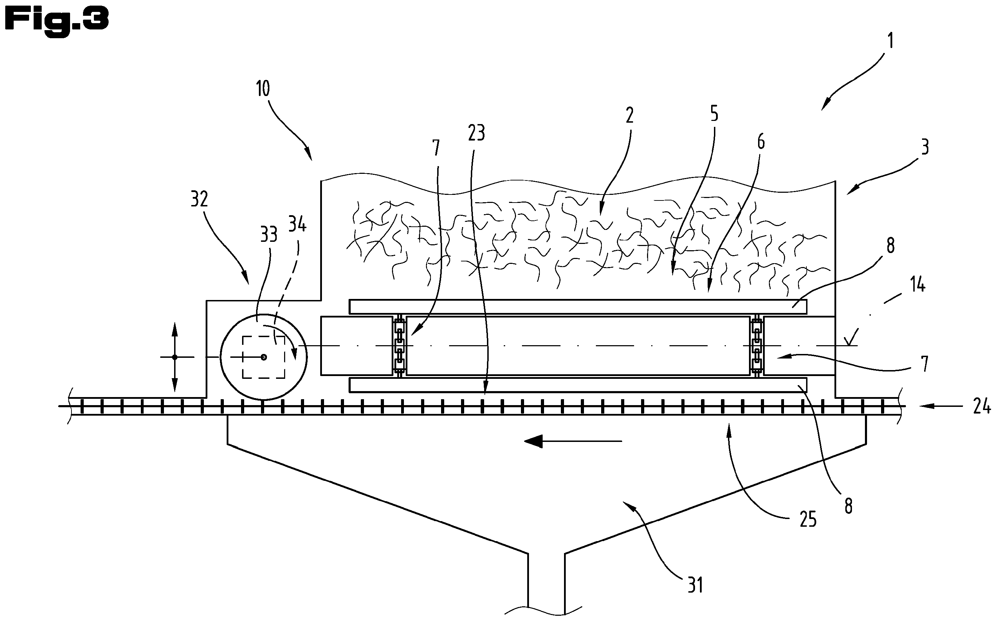

In den Fig. 1 und 3 ist eine Möglichkeit zur besseren und sichereren Befüllung des zweiten Fördermechanismus 24 mit dem bereits aufgelösten oder vereinzelten Schüttgut 2 im Übergabebereich 23 gezeigt, wobei dazu eine Befüllvorrichtung 32 vorgesehen ist. Die Befüllvorrichtung 32 dient dazu oder ist dazu ausgebildet, das sich bereits im Übergabebereich 23 befindliche Schüttgut 2 zu dessen Abfuhr und Weitertransport sicher mit dem zweiten Fördermechanismus 24 in Kontakt zu bringen. Damit sollen die dazu vorgesehenen einzelnen Förderräume des zweiten Fördermechanismus 24 mit dem abzutransportierenden Schüttgut 2 befüllt werden. Die Befüllvorrichtung 32 kann auch als Druckvorrichtung bezeichnet werden.

Wie nun besser aus der Fig. 3 zu ersehen ist, befindet sich die Befüllvorrichtung 32 bei üblicher und für den Betrieb vorgesehenen Aufstellposition oberhalb des zweiten Fördermechanismus 24. Weiters ist noch zu ersehen, dass die Befüllvorrichtung 32 in Förderrichtung des zweiten Fördermechanismus 24 gesehen seitlich neben der zweiten Umlenkvorrichtung 13 sowie nachfolgend an den ersten Fördermechanismus 6 angeordnet ist. Aus Gründen der besseren Übersichtlichkeit halber, wurde die Antriebsvorrichtung 15 in der Fig. 3 nicht mehr dargestellt.

Im vorliegenden Ausführungsbeispiel umfasst die Befüllvorrichtung 32 zumindest einen bevorzugt zylindrisch ausgebildeten Wälzkörper 33, welcher auch als Drehkörper oder Rotationskörper bezeichnet werden kann. Der zumindest eine Wälzkörper 33 ist seinerseits drehbar gelagert und kann mit einem Antriebsmittel 34 in Antriebsverbindung stehen. Das Antriebsmittel 34 kann z.B. durch einen eigenen Antriebmotor gebildet sein. Es könnte aber auch der Antrieb des zweiten Fördermechanismus 24 und/oder die Antriebsvorrichtung 15 mit dem zumindest einen Wälzkörper 33 in Antriebsverbindung stehen.

Der Wälzkörper 33 kann z.B. durch ein Rad und/oder eine Scheibe oder/oder eine Walze gebildet sein. Die äußere Oberfläche oder Umfangsfläche kann glatt, strukturiert oder in Ansicht auf die Drehachse auch wellenförmig verlaufend ausgebildet sein. Es könnten aber auch zusätzliche und über den Umfang verteilt angeordnet Dorne, Vorsprünge, Spieße oder dergleichen am Wälzkörper 33 angeordnet oder ausgebildet sein. Weiters wäre es noch möglich, die Querschnittsform des Wälzkörpers 33 an die äußere Umrissform des unterhalb befindlichen zweiten Fördermechanismus 24 weitgehend anzupassen. Die Drehachse des Wälzkörpers 33 weist bevorzugt eine normale Ausrichtung bezüglich der Längserstreckung des zweiten Fördermechanismus 24 im Übergabebereich 23 auf. Der Drehsinn des Wälzkörpers 33 ist so gewählt, dass dieser in dem dem zweiten Fördermechanismus 24 zugewendeten Bereich gleichsinnig zu der Förderbewegung des zweiten Fördermechanismus 24 verläuft. Dies ist durch eingetragene Pfeile veranschaulicht.

Zwischen dem Wälzkörper 33 und dem zweiten Fördermechanismus 24 ist ein bevorzugt geringer Spalt ausgebildet, um einerseits eine Kollision zwischen den zueinander bewegten Komponenten zu vermeiden und andererseits das aufgelöste Schüttgut 2 in den zweiten Fördermechanismus 24 hinein zu drücken.

Der beschriebene Spalt kann auch variabel einstellbar sein. Dies ist mit einem Doppelpfeil vereinfacht neben dem Wälzkörper 33 angedeutet. Damit kann die Spaltweite auf das jeweils aufzulösende Schüttgut 2 individuell angepasst werden. Weiters wäre es noch möglich, die Spaltweite im laufenden Betrieb konstant zu halten oder die Spaltweite im laufenden Betrieb in gewissen vorbestimmten Grenzen alternierend zu vergrößern und zu verkleinern.

Unterhalb des Gehäuseabschnitts 25 zur Führung des zweiten Fördermechanismus 24 ist noch der zuvor beschriebene Absaugkanal 31 angedeutet, welcher zur Absaugung von Staub oder dergleichen aus dem Schüttgut 2 dienen kann.

Das Verfahren zum Auflösen einer in einer Wirrlage befindlichen Gesamtmenge von Schüttgut 2 in dazu kleinere Teilmengen umfasst zumindest folgende Schritte:
- Bereitstellen des aufzulösenden Schüttgutes 2,
- Bereitstellen der Aufnahmevorrichtung 3, welche Aufnahmevorrichtung 3 schachtförmig oder trichterförmig ausgebildet ist und von dieser der Zufuhrbereich 4 und der bodenseitig befindliche Abfuhrbereich 5 definiert wird,
- Bereitstellen des ersten Fördermechanismus 6, welcher erste Fördermechanismus 6 im Abfuhrbereich 5 angeordnet ist und zumindest ein endlos umlaufendes Förderorgan 7 mit daran angeordneten Förderelementen 8 umfasst, wobei das zumindest eine Förderorgan 7 jeweils am ersten Kopfendbereich 9 an der ersten Umlenkvorrichtung 11 mit der ersten Umlenkachse 12 und an dem in Förderrichtung beabstandet angeordneten zweiten Kopfendbereich 10 an der zweiten Umlenkvorrichtung 13 mit der zweiten Umlenkachse 14 umgelenkt wird, wobei eine der Umlenkvorrichtung 11, 13 von der Antriebsvorrichtung 15 angetrieben wird, und vom zumindest einen Förderorgan 7 der oberer Trum 16 und der unterer Trum 17 definiert wird, und weiters von den Förderelementen 8 außenseitig die umlaufend ausgebildete Umhüllende 20 mit ihrer Förderbreite 18 definiert wird,
- Bereitstellen des ersten Fördergehäuses 21, welches erste Fördergehäuse 21 im ersten Kopfendbereich 9 angeordnet wird und von diesem die erste Umlenkvorrichtung 11 abdeckt wird,
- Bereitstellen des zweiten Fördergehäuses 22, welches zweite Fördergehäuse 22 im zweiten Kopfendbereich 10 angeordnet wird und von diesem die zweite Umlenkvorrichtung 13 abdeckt wird,
- Bereitstellen des zweiten Fördermechanismus 24, welcher zweite Fördermechanismus 24 im zweiten Kopfendbereich 10 angeordnet wird und sich zumindest entlang der Förderbreite 18 erstreckt,
- wobei der zweite Fördermechanismus 24 innerhalb des zweiten Fördergehäuses 22 aufgenommen und angeordnet wird und in einem Bereich unterhalb der zweiten Umlenkachse 14 der zweiten Umlenkvorrichtung 13 sowie außerhalb der von den Förderelementen 8 außenseitig definierten Umhüllenden 20 angeordnet wird, und wobei zwischen dem ersten Fördermechanismus 6 und dem zweiten Fördermechanismus 24 der Übergabebereich 23 definiert wird, und
- Bereitstellen des Stützelements 27, welches Stützelement 27 unterhalb des unteren Trums 17 des zumindest einen endlos umlaufenden Förderorgans 7 angeordnet wird und sich zwischen dem ersten Fördergehäuse 21 und dem zweiten Fördergehäuse 22 erstreckt und von diesem der sich zwischen den beiden Kopfendbereichen 9, 10 erstreckender Rückförderabschnitt 26 definiert wird,
- Zuführen der Gesamtmenge des auflösenden Schüttgutes 2 in die Aufnahmevorrichtung 3 bis hin in deren Abfuhrbereich 5,
- Zufördern der einzelnen Teilmengen des Schüttgutes 2 mittels des ersten Fördermechanismus 6 aus dem Abfuhrbereich 5 hin in den zweiten Kopfendbereich 10 und Übergeben der einzelnen Teilmengen des Schüttgutes 2 im Übergabebereich 23 an den zweiten Fördermechanismus 24, und
- Wegfördern einer Fördermenge des übergebenen Schüttgutes 2 mittels des zweiten Fördermechanismus 24 aus dem Übergabebereich 23 an eine Abgabestelle.

Bei den jeweils angegebenen Mengen kann es sich um ein Volumen oder eine Masse jeweils bezogen auf eine vorbestimmte Zeiteinheit handeln. Die Gesamtmenge des Schüttgutes 2 wird beim Betrieb und dem Auflösevorgang in Abhängigkeit von den aufgelösten und abtransportierten Teilmengen je Zeiteinheit geringer.

Das Zufördern der einzelnen Teilmengen des Schüttgutes 2 aus dem Abfuhrbereich 5 zum Übergabebereich 23 kann kontinuierlich oder diskontinuierlich durchgeführt werden. Das Wegfördern der Fördermenge des übergebenen Schüttgutes 2 kann auch kontinuierlich oder diskontinuierlich durchgeführt werden.

Tritt beim Betrieb der Auflöseeinheit 1 jener Fall ein, bei dem die jeweils zugeförderten einzelnen Teilmengen des Schüttgutes 2 je Zeiteinheit größer als die vom zweiten Fördermechanismus 24 weggeförderten oder abgeförderten Fördermengen je Zeiteinheit sind, kommt es zu einer im Übergabebereich 23 vorhandenen Differenzmenge oder Überschussmenge des Schüttgutes 2. Dies führt üblicher Weise zu Verstopfungen, einer Brückenbildung oder dergleichen und in weiterer Folge zu einer Betriebsstörung und bedingten Unterbrechung.

Um dies verhindern zu können, ist der zuvor beschriebene Rückförderabschnitt 26 unterhalb des ersten Fördermechanismus 6 vorgesehen. Befindet sich der Überschuss des Schüttgutes 2 in Form der Differenzmenge im Übergabebereich 23, kann diese Differenzmenge von den Förderelementen 8 ausgehend vom zweiten Kopfendbereich 10 zurück zum ersten Kopfendbereich 9 und von diesem empor in den Abfuhrbereich 5 der Aufnahmevorrichtung 3 zurück gefördert werden. Das Schüttgut 2 stützt sich auf dem Stützelement 27 ab oder liegt auf diesem auf und wird entlang desselben von den in Richtung auf den Boden vorragenden Förderelementen 8 mitgenommen.

Die mögliche Anordnung der Befüllvorrichtung 32 in jenem Bereich, der in Förderrichtung des zweiten Fördermechanismus 24 gesehen unmittelbar seitlich an den Übergabebereich 23 anschließend angeordnet ist, kann so das Schüttgut 2 noch besser in die im zweiten Fördermechanismus 24 befindlichen einzelnen und hintereinander befindlichen Aufnahmeräume oder Förderräume hinein verbracht werden. Bei der bevorzugt gleichsinnig gewählten Förder- und Drehrichtung zwischen dem zweiten Fördermechanismus 24 und dem Wälzkörper 33 können so Verstopfungen durch die Teilmengen des Schüttguts 2 im Übergabebereich 23 zum überwiegenden Teil vermindert oder überhaupt vermieden werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| | | 30 | Durchbruch |
| 1 | Auflöseeinheit | 31 | Absaugkanal |
| 2 | Schüttgut | 32 | Befüllvorrichtung |
| 3 | Aufnahmevorrichtung | 33 | Wälzkörper |
| 4 | Zufuhrbereich | 34 | Antriebsmittel |
| 5 | Abfuhrbereich | | |
| 6 | erster Fördermechanismus | | |
| 7 | Förderorgan | | |
| 8 | Förderelement | | |
| 9 | erster Kopfendbereich | | |
| 10 | zweiter Kopfendbereich | | |
| 11 | erste Umlenkvorrichtung | | |
| 12 | erste Umlenkachse | | |
| 13 | zweite Umlenkvorrichtung | | |
| 14 | zweite Umlenkachse | | |
| 15 | Antriebsvorrichtung | | |
| 16 | oberer Trum | | |
| 17 | unterer Trum | | |
| 18 | Förderbreite | | |
| 19 | Stützeinheit | | |
| 20 | Umhüllende | | |
| 21 | erstes Fördergehäuse | | |
| 22 | zweites Fördergehäuse | | |
| 23 | Übergabebereich | | |
| 24 | zweiter Fördermechanismus | | |
| 25 | Gehäuseabschnitt | | |
| 26 | Rückförderabschnitt | | |
| 27 | Stützelement | | |
| 28 | Schieberelement | | |
| 29 | Absaugvorrichtung | | |

## Patentansprüche

1. Auflöseeinheit (1) für eine in einer Wirrlage befindliche Gesamtmenge von Schüttgut (2), insbesondere von gemulchtem oder gehäckseltem Gut, verkürztem Stroh oder Heu, in dazu kleinere Teilmengen, die Auflöseeinheit (1) umfasst
- eine Aufnahmevorrichtung (3), welche Aufnahmevorrichtung (3) schachtförmig oder trichterförmig ausgebildet ist und einen Zufuhrbereich (4) und einen bodenseitig befindlichen Abfuhrbereich (5) definiert,
- einen ersten Fördermechanismus (6), welcher erste Fördermechanismus (6) im Abfuhrbereich (5) angeordnet ist und zumindest ein endlos umlaufendes Förderorgan (7) mit daran angeordneten Förderelementen (8) umfasst, wobei das zumindest eine Förderorgan (7) jeweils an einem ersten Kopfendbereich (9) an einer ersten Umlenkvorrichtung (11) mit einer ersten Umlenkachse (12) und einem in Förderrichtung beabstandet angeordneten zweiten Kopfendbereich (10) an einer zweiten Umlenkvorrichtung (13) mit einer zweiten Umlenkachse (14) umgelenkt ist, wobei zumindest eine der Umlenkvorrichtungen (11, 13) mit einer Antriebsvorrichtung (15) in Antriebsverbindung steht, und das zumindest eine Förderorgan (7) einen oberen Trum (16) und einen unteren Trum (17) ausbildet, und weiters von den Förderelementen (8) außenseitig eine umlaufend ausgebildete Umhüllende (20) mit einer Förderbreite (18) definiert ist,
- ein erstes Fördergehäuse (21), welches erste Fördergehäuse (21) im ersten Kopfendbereich (9) angeordnet ist und die erste Umlenkvorrichtung (11) abdeckt,
- ein zweites Fördergehäuse (22), welches zweite Fördergehäuse (22) im zweiten Kopfendbereich (10) angeordnet ist und die zweite Umlenkvorrichtung (13) abdeckt,
- einen zweiten Fördermechanismus (24), welcher zweite Fördermechanismus (24) im zweiten Kopfendbereich (10) angeordnet ist und sich zumindest entlang der Förderbreite (18) erstreckt,
- wobei der zweite Fördermechanismus (24) innerhalb des zweiten Fördergehäuses (22) aufgenommen und angeordnet ist und in einem Bereich unterhalb der zweiten Umlenkachse (14) der zweiten Umlenkvorrichtung (13) sowie außerhalb der von den Förderelementen (8) außenseitig definierten Umhüllenden (20) angeordnet ist, und wobei zwischen dem ersten Fördermechanismus (6) und dem zweiten Fördermechanismus (24) ein Übergabebereich (23) definiert ist, wobei der zweite Fördermechanismus (24) in seinem Querschnitt gesehen unterhalb der zweiten Umlenkachse (14) der zweiten Umlenkvorrichtung (13) sowie außerhalb der von den Förderelementen (8) außenseitig definierten Umhüllenden (20) angeordnet ist, und
- ein Stützelement (27), welches Stützelement (27) unterhalb des unteren Trums (17) des zumindest einen endlos umlaufenden Förderorgans (7) angeordnet ist und sich zwischen dem ersten Fördergehäuse (21) und dem zweiten Fördergehäuse (22) erstreckt und dabei einen sich zwischen den beiden Kopfendbereichen (9, 10) erstreckenden Rückförderabschnitt (26) definiert,
**dadurch gekennzeichnet, dass**
der zweite Fördermechanismus (24) in einem trogförmig ausgebildeten Gehäuseabschnitt (25) des zweiten Fördergehäuses (22) aufgenommen ist.

2. Auflöseeinheit (1) nach Anspruch 1, **dadurch gekennzeichnet, dass** der zweite Fördermechanismus (24) zumindest entlang der Förderbreite (18) eine parallele Ausrichtung bezüglich der zweiten Umlenkachse (14) aufweist.

3. Auflöseeinheit (1) nach einem der vorhergehenden Ansprüche, **dadurch gekennzeichnet, dass** der trogförmig ausgebildete Gehäuseabschnitt (25) mit einer Vielzahl von Durchbrüchen (30) versehen ist und die Durchbrüche (30) in einen Absaugkanal (31) einmünden und der Absaugkanal (31) mit einer Absaugvorrichtung (29) in Strömungsverbindung steht.

4. Auflöseeinheit (1) nach einem der vorhergehenden Ansprüche, **dadurch gekennzeichnet, dass** das erste Fördergehäuse (21) und das zweite Fördergehäuse (22) jeweils außenseitig und seitlich abstehend an den bodenseitig befindlichen Abfuhrbereich (5) der schachtförmig oder trichterförmig ausgebildeten Aufnahmevorrichtung (3) angeordnet sind.

5. Auflöseeinheit (1) nach einem der vorhergehenden Ansprüche, **dadurch gekennzeichnet, dass** ein Schieberelement (28) vorgesehen ist, welches Schieberelement (28) im Abfuhrbereich (5) aus der Aufnahmevorrichtung (3) in den zweiten Kopfendbereich (10) oberhalb des oberen Trums (16) des zumindest einen endlos umlaufenden Förderorgans (7) angeordnet ist und zur Einstellung eines lichten Durchtrittsquerschnitts in seiner Position bedarfsweise relativ bezüglich des oberen Trums (16) verstellbar ist.

6. Auflöseeinheit (1) nach einem der vorhergehenden Ansprüche, **dadurch gekennzeichnet, dass** der erste Fördermechanismus (6) zumindest zwei umlaufende Förderorgane (7) umfasst, welche in Richtung der Förderbreite (18) voneinander beabstandet angeordnet sind.

7. Auflöseeinheit (1) nach einem der vorhergehenden Ansprüche, **dadurch gekennzeichnet, dass** die Förderelemente (8) insbesondere stabförmig ausgebildet sind und sich durchgehend über die Förderbreite (18) erstrecken.

8. Auflöseeinheit (1) nach einem der vorhergehenden Ansprüche, **dadurch gekennzeichnet, dass** die insbesondere stabförmig ausgebildeten Förderelemente (8) auf einer tischartig ausgebildeten Stützeinheit (19) abgestützt sind und jedes der umlaufenden Förderorgane (7) jeweils in einem in der Stützeinheit (19) angeordneten oder ausgebildeten Kanal oder in einem Schlitz aufgenommen ist.

9. Auflöseeinheit (1) nach einem der vorhergehenden Ansprüche, **dadurch gekennzeichnet, dass** eine Befüllvorrichtung (32) vorgesehen ist, welche Befüllvorrichtung (32) im Übergabebereich (23) des zweiten Kopfendbereichs (10) sowie oberhalb des zweiten Fördermechanismus (24) angeordnet ist.

10. Auflöseeinheit (1) nach Anspruch 9, **dadurch gekennzeichnet, dass** die Befüllvorrichtung (32) in Förderrichtung des zweiten Fördermechanismus (24) gesehen seitlich neben der zweiten Umlenkvorrichtung (13) angeordnet ist.

11. Auflöseeinheit (1) nach Anspruch 9 oder 10, **dadurch gekennzeichnet, dass** die Befüllvorrichtung (32) zumindest einen drehbar gelagerten Wälzkörper (33) umfasst und der Wälzkörper (33) mit einem Antriebsmittel (34) in Antriebsverbindung steht.

12. Auflöseeinheit (1) nach einem der vorhergehenden Ansprüche, **dadurch gekennzeichnet, dass** der zweite Fördermechanismus (24) aus der Gruppe von Schneckenförderer, Rohrförderer, Rohrkettenförderer oder Rohrseilförderer ausgewählt ist.

13. Verfahren zum Auflösen einer in einer Wirrlage befindlichen Gesamtmenge von Schüttgut (2), insbesondere von gemulchtem oder gehäckseltem Gut, verkürztem Stroh oder Heu, in dazu kleinere Teilmengen, insbesondere unter Verwendung der Auflöseeinheit (1) nach einem der vorhergehenden Ansprüche, bei dem folgende Schritte durchgeführt werden
- Bereitstellen des aufzulösenden Schüttgutes (2),
- Bereitstellen einer Aufnahmevorrichtung (3), welche Aufnahmevorrichtung (3) schachtförmig oder trichterförmig ausgebildet ist und von dieser ein Zufuhrbereich (4) und ein bodenseitig befindlicher Abfuhrbereich (5) definiert wird,
- Bereitstellen eines ersten Fördermechanismus (6), welcher erste Fördermechanismus (6) im Abfuhrbereich (5) angeordnet ist und zumindest ein endlos umlaufendes Förderorgan (7) mit daran angeordneten Förderelementen (8) umfasst, wobei das zumindest eine Förderorgan (7) jeweils an einem ersten Kopfendbereich (9) an einer ersten Umlenkvorrichtung (11) mit einer ersten Umlenkachse (12) und einem in Förderrichtung beabstandet angeordneten zweiten Kopfendbereich (10) an einer zweiten Umlenkvorrichtung (13) mit einer zweiten Umlenkachse (14) umgelenkt wird, wobei eine der Umlenkvorrichtung (11, 13) von einer Antriebsvorrichtung (15) angetrieben wird, und vom zumindest einen Förderorgan (7) ein oberer Trum (16) und ein unterer Trum (17) definiert wird, und weiters von den Förderelementen (8) außenseitig eine umlaufend ausgebildete Umhüllende (20) mit einer Förderbreite (18) definiert wird,
- Bereitstellen eines ersten Fördergehäuses (21), welches erste Fördergehäuse (21) im ersten Kopfendbereich (9) angeordnet wird und von diesem die erste Umlenkvorrichtung (11) abdeckt wird,
- Bereitstellen eines zweiten Fördergehäuses (22), welches zweite Fördergehäuse (22) im zweiten Kopfendbereich (10) angeordnet wird und von diesem die zweite Umlenkvorrichtung (13) abdeckt wird,
- Bereitstellen eines zweiten Fördermechanismus (24), welcher zweite Fördermechanismus (24) im zweiten Kopfendbereich (10) angeordnet wird und sich zumindest entlang der Förderbreite (18) erstreckt,
- wobei der zweite Fördermechanismus (24) innerhalb des zweiten Fördergehäuses (22) aufgenommen und angeordnet wird und in einem Bereich unterhalb der zweiten Umlenkachse (14) der zweiten Umlenkvorrichtung (13) sowie außerhalb der von den Förderelementen (8) außenseitig definierten Umhüllenden (20) angeordnet wird, und wobei zwischen dem ersten Fördermechanismus (6) und dem zweiten Fördermechanismus (24) ein Übergabebereich (23) definiert wird, wobei der zweite Fördermechanismus (24) in seinem Querschnitt gesehen unterhalb der zweiten Umlenkachse (14) der zweiten Umlenkvorrichtung (13) sowie außerhalb der von den Förderelementen (8) außenseitig definierten Umhüllenden (20) angeordnet ist,
- Bereitstellen eines Stützelements (27), welches Stützelement (27) unterhalb des unteren Trums (17) des zumindest einen endlos umlaufenden Förderorgans (7) angeordnet wird und sich zwischen dem ersten Fördergehäuse (21) und dem zweiten Fördergehäuse (22) erstreckt und von diesem ein sich zwischen den beiden Kopfendbereichen (9, 10) erstreckender Rückförderabschnitt (26) definiert wird,
- Zuführen der Gesamtmenge des auflösenden Schüttgutes (2) in die Aufnahmevorrichtung (3) bis hin in deren Abfuhrbereich (5),
- Zufördern der einzelnen Teilmengen des Schüttgutes (2) mittels des ersten Fördermechanismus (6) aus dem Abfuhrbereich (5) hin in den zweiten Kopfendbereich (10) und Übergeben der einzelnen Teilmengen des Schüttgutes (2) im Übergabebereich (23) an den zweiten Fördermechanismus (24), und
- Wegfördern einer Fördermenge des übergebenen Schüttgutes (2) mittels des zweiten Fördermechanismus (24) aus dem Übergabebereich (23) an eine Abgabestelle, **dadurch gekennzeichnet, dass** der zweite Fördermechanismus (24) in einem trogförmig ausgebildeten Gehäuseabschnitt (25) des zweiten Fördergehäuses (22) aufgenommen wird.

14. Verfahren nach Anspruch 13, **dadurch gekennzeichnet, dass** das Zufördern der einzelnen Teilmengen des Schüttgutes (2) kontinuierlich oder diskontinuierlich durchgeführt wird.

15. Verfahren nach Anspruch 13 oder 14, **dadurch gekennzeichnet, dass** das Wegfördern der Fördermenge des übergebenen Schüttgutes (2) kontinuierlich oder diskontinuierlich durchgeführt wird.

16. Verfahren nach einem der Ansprüche 13 bis 15, **dadurch gekennzeichnet, dass** bei einem Unterschreiten der weggeförderten Fördermenge bezüglich der in gleicher Zeiteinheit zugeförderten Teilmengen eine im Übergabebereich (23) verbliebene Differenzmenge des Schüttgutes (2) mittels der am zumindest einen umlaufenden Förderorgan (7) angeordneten Förderelemente (8) entlang des Rückförderabschnitts (26) hin zum ersten Kopfendbereich (9) und weiter in den Abfuhrbereich (5) der Aufnahmevorrichtung (3) zurückgefördert wird.

17. Verfahren nach einem der Ansprüche 13 bis 16, **dadurch gekennzeichnet, dass** der trogförmig ausgebildete Gehäuseabschnitt (25) mit einer Vielzahl von Durchbrüchen (30) versehen ist und dass die Durchbrüche (30) in einen mit einer Absaugvorrichtung (29) in Strömungsverbindung stehenden Absaugkanal (31) einmünden und dass mittels der Absaugvorrichtung (29) jene durch die Durchbrüche (30) in den Absaugkanal (31) gelangten Partikel des Schüttgutes (2) abgesaugt werden.

18. Verfahren nach einem der Ansprüche 13 bis 17, **dadurch gekennzeichnet, dass** eine Befüllvorrichtung (32) bereitgestellt, welche Befüllvorrichtung (32) im Übergabebereich (23) des zweiten Kopfendbereichs (10) sowie oberhalb des zweiten Fördermechanismus (24) angeordnet wird.

19. Verfahren nach Anspruch 18, **dadurch gekennzeichnet, dass** die Befüllvorrichtung (32) in Förderrichtung des zweiten Fördermechanismus (24) gesehen seitlich neben der zweiten Umlenkvorrichtung (13) angeordnet wird und mittels der Befüllvorrichtung (32) der zweite Fördermechanismus (24) mit den im Übergabebereich (23) befindlichen Teilmengen des Schüttguts (2) zum Wegfördern aus dem Übergabebereich (23) befüllt wird.

## Claims

1. A breaking-up unit (1) for a total quantity of bulk material (2) in a tangled position, in particular mulched or chopped material, shortened straw or hay, into smaller partial quantities, the breaking-up unit (1) comprising
- a receiving device (3), which receiving device (3) is configured to be shaft-shaped or funnel-shaped and defines a supply area (4) and a discharge area (5) located on the bottom side,
- a first conveying mechanism (6), which first conveying mechanism (6) is arranged in the discharge area (5) and comprises at least one endlessly circulating conveying member (7) with conveying elements (8) arranged thereon, wherein the at least one conveying member (7) is deflected in each case at a first head end region (9) on a first deflection device (11) with a first deflection axis (12) and at a second head end region (10), which is arranged at a distance in the conveying direction, on a second deflection device (13) with a second deflection axis (14), wherein at least one of the deflection devices (11, 13) is in drive connection with a drive device (15), and the at least one conveying member (7) forms an upper run (16) and a lower run (17), and furthermore a circumferentially formed envelope (20) with a conveying width (18) is defined on the outside of the conveying elements (8),
- a first conveyor housing (21), which first conveyor housing (21) is arranged in the first head end region (9) and covers the first deflection device (11),
- a second conveyor housing (22), which second conveyor housing (22) is arranged in the second head end region (10) and covers the second deflection device (13)
- a second conveying mechanism (24), which second conveying mechanism (24) is arranged in the second head end region (10) and extends at least along the conveying width (18),
- wherein the second conveying mechanism (24) is received and arranged within the second conveyor housing (22) and is arranged in a region below the second deflection axis (14) of the second deflection device (13) and outside the envelope (20) defined on the outside by the conveying elements (8), and wherein a transfer region (23) is defined between the first conveying mechanism (6) and the second conveying mechanism (24), wherein the second conveying mechanism (24), as seen in its cross section, is arranged below the second deflection axis (14) of the second deflection device (13) and outside the envelope (20) defined on the outside by the conveying elements (8), and
- a supporting element (27), which supporting element (27) is arranged below the lower run (17) of the at least one endlessly circulating conveying member (7) and extends between the first conveyor housing (21) and the second conveyor housing (22) and thereby defines a return conveying section (26) extending between the two head end regions (9, 10),
**characterized in that**
the second conveying mechanism (24) is received in a trough-shaped housing section (25) of the second conveyor housing (22).

2. The breaking-up unit (1) according to claim 1, **characterized in that** the second conveying mechanism (24) has a parallel alignment with respect to the second deflection axis (14) at least along the conveying width (18).

3. The breaking-up unit (1) according to one of the preceding claims, **characterized in that** the trough-shaped housing section (25) is provided with a plurality of apertures (30) and the apertures (30) open into a suction channel (31) and the suction channel (31) is in flow connection with a suction device (29).

4. The breaking-up unit (1) according to one of the preceding claims, **characterized in that** the first conveyor housing (21) and the second conveyor housing (22) are each arranged on the outside and projecting laterally from the bottom-side discharge area (5) of the receiving device (3), which is configured to be shaft-shaped or funnel-shaped.

5. The breaking-up unit (1) according to one of the preceding claims, **characterized in that** a sliding element (28) is provided, which sliding element (28) is arranged in the discharge area (5) from the receiving device (3) into the second head end region (10) above the upper run (16) of the at least one endlessly circulating conveying member (7) and can be adjusted in its position relative to the upper run (16) as required in order to set a clear passage cross section.

6. The breaking-up unit (1) according to one of the preceding claims, **characterized in that** the first conveying mechanism (6) comprises at least two circulating conveying members (7) which are arranged spaced apart from one another in the direction of the conveying width (18).

7. The breaking-up unit (1) according to one of the preceding claims, **characterized in that** the conveying elements (8) are in particular rod-shaped and extend continuously over the conveying width (18).

8. The breaking-up unit (1) according to one of the preceding claims, **characterized in that** the conveying members (8), which are in particular rod-shaped, are supported on a table-like supporting unit (19), and each of the circulating conveying members (7) is received in a respective channel arranged or formed in the supporting unit (19) or in a slot.

9. The breaking-up unit (1) according to one of the preceding claims, **characterized in that** a filling device (32) is provided, which filling device (32) is arranged in the transfer region (23) of the second head end region (10) and above the second conveying mechanism (24).

10. The breaking-up unit (1) according to claim 9, **characterized in that** the filling device (32) is arranged laterally next to the second deflection device (13) as seen in the conveying direction of the second conveying mechanism (24).

11. The breaking-up unit (1) according to claim 9 or 10, **characterized in that** the filling device (32) comprises at least one rotatably mounted rolling body (33) and the rolling body (33) is in drive connection with a drive means (34).

12. The breaking-up unit (1) according to one of the preceding claims, **characterized in that** the second conveying mechanism (24) is selected from the group of screw conveyors, tube conveyors, tube chain conveyors or tube rope conveyors.

13. A method for breaking up a total quantity of bulk material (2) in a tangled position, in particular mulched or chopped material, shortened straw or hay, into smaller partial quantities, in particular using the breaking-up unit (1) according to one of the preceding claims, in which the following steps are carried out
- providing the bulk material (2) to be broken up,
- providing a receiving device (3), which receiving device (3) is configured to be shaft-shaped or funnel-shaped and defines a supply area (4) and a discharge area (5) located on the bottom side,
- providing a first conveying mechanism (6), which first conveying mechanism (6) is arranged in the discharge area (5) and comprises at least one endlessly circulating conveying member (7) with conveying elements (8) arranged thereon, wherein the at least one conveying member (7) is deflected in each case at a first head end region (9) on a first deflection device (11) with a first deflection axis (12) and at a second head end region (10) arranged at a distance in the conveying direction on a second deflection device (13) with a second deflection axis (14), wherein one of the deflection devices (11, 13) is driven by a drive device (15), and an upper run (16) and a lower run (17) are defined by the at least one conveying member (7), and furthermore a circumferentially formed envelope end (20) with a conveying width (18) is defined on the outside of the conveying elements (8),
- providing a first conveyor housing (21), which first conveyor housing (21) is arranged in the first head end region (9) and covers the first deflection device (11),
- providing a second conveyor housing (22), which second conveyor housing (22) is arranged in the second head end region (10) and covers the second deflection device (13),
- providing a second conveying mechanism (24), which second conveying mechanism (24) is arranged in the second head end region (10) and extends at least along the conveying width (18),
- wherein the second conveying mechanism (24) is received and arranged within the second conveyor housing (22) and is arranged in a region below the second deflection axis (14) of the second deflection device (13) and outside the envelope (20) defined on the outside by the conveying elements (8), and wherein a transfer region (23) is defined between the first conveying mechanism (6) and the second conveying mechanism (24), wherein the second conveying mechanism (24), as seen in its cross section, is arranged below the second deflection axis (14) of the second deflection device (13) and outside the envelope (20) defined on the outside by the conveying elements (8),
- providing a supporting element (27), which supporting element (27) is arranged below the lower run (17) of the at least one endlessly circulating conveying member (7) and extends between the first conveyor housing (21) and the second conveyor housing (22) and by which a return conveying section (26) extending between the two head end regions (9, 10) is defined,
- feeding the total quantity of the breaking-up bulk material (2) into the receiving device (3) as far as its discharge area (5),
- feeding the individual partial quantities of the bulk material (2) by means of the first conveying mechanism (6) from the discharge area (5) into the second head end region (10) and transferring the individual partial quantities of the bulk material (2) in the transfer region (23) to the second conveying mechanism (24), and
- conveying away a conveying quantity of the transferred bulk material (2) by means of the second conveying mechanism (24) from the transfer region (23) to a discharge point,
**characterized in that** the second conveying mechanism (24) is received in a trough-shaped housing section (25) of the second conveyor housing (22).

14. The method according to claim 13, **characterized in that** the feeding of the individual partial quantities of the bulk material (2) is carried out continuously or discontinuously.

15. The method according to claim 13 or 14, **characterized in that** the conveying away of the conveying quantity of the transferred bulk material (2) is carried out continuously or discontinuously.

16. The method according to one of claims 13 to 15, **characterized in that** when the conveying quantity conveyed away falls below the partial quantities supplied in the same unit of time, a differential quantity of the bulk material (2) remaining in the transfer region (23) is conveyed back along the return conveying section (26) to the first head end region (9) and further into the discharge area (5) of the receiving device (3) by means of the conveying members (8) arranged on the at least one circulating conveying member (7).

17. The method according to one of claims 13 to 16, **characterized in that** the trough-shaped housing section (25) is provided with a plurality of apertures (30) and that the apertures (30) open into a suction channel (31) which is in flow connection with a suction device (29), and that those particles of the bulk material (2) which have passed through the apertures (30) into the suction channel (31) are sucked off by means of the suction device (29).

18. The method according to one of claims 13 to 17, **characterized in that** a filling device (32) is provided, which filling device (32) is arranged in the transfer region (23) of the second head end region (10) and above the second conveying mechanism (24).

19. The method according to claim 18, **characterized in that** the filling device (32) is arranged laterally next to the second deflection device (13), as seen in the conveying direction of the second conveying mechanism (24), and the second conveying mechanism (24) is filled by means of the filling device (32) with the partial quantities of the bulk material (2) located in the transfer region (23) for conveying away from the transfer region (23).

## Revendications

1. Unité de démêlage (1) pour une quantité totale de matériau en vrac (2) emmêlé, plus particulièrement d'un matériau broyé ou haché, de paille ou de foin raccourci, en des sous-quantités plus petites, l'unité de démêlage (1) comprenant :
- un dispositif de réception (3), ce dispositif de réception (3) présentant une forme de puits ou d'entonnoir et définissant une zone d'alimentation (4) et une zone d'évacuation (5) située côté fond,
- un premier mécanisme de transport (6), ce premier mécanisme de transport (6) étant disposé dans la zone d'évacuation (5) et comprenant au moins un organe de transport à circulation sans fin (7) avec des éléments de transport (8) disposés sur celui-ci, dans lequel l'au moins un organe de transport (7) est respectivement dévié, au niveau d'une première zone d'extrémité de tête (9), vers un premier dispositif de renvoi (11) avec un premier axe de renvoi (12) et, au niveau d'une deuxième zone d'extrémité de tête (10) disposée à distance, dans le sens du transport, vers un deuxième dispositif de renvoi (13) avec un deuxième axe de renvoi (14), dans lequel au moins un des dispositifs de renvoi (11, 13) est en liaison d'entraînement avec un dispositif d'entraînement (15) et l'au moins un organe de transport (7) forme un brin supérieur (16) et un brin inférieur (17) et une enveloppe (20) de forme circulaire avec une largeur de transport (18) est en outre définie extérieurement par les éléments de transport (8),
- un premier carter de transport (21), ce premier carter de transport (21) étant disposé dans la première zone d'extrémité de tête (9) et recouvrant le premier dispositif de renvoi (11),
- un deuxième carter de transport (22), ce deuxième carter de transport (22) étant disposé dans la deuxième zone d'extrémité de tête (10) et recouvrant le deuxième dispositif de renvoi (13),
- un deuxième mécanisme de transport (24), ce deuxième mécanisme de transport (24) étant disposé dans la deuxième zone d'extrémité de tête (10) et s'étendant au moins le long de la largeur de transport (18),
- dans lequel le deuxième mécanisme de transport (24) est logé et disposé à l'intérieur du deuxième carter de transport (22) et est disposé dans une zone située en dessous du deuxième axe de renvoi (14) du deuxième dispositif de renvoi (13) ainsi qu'à l'extérieur de l'enveloppe (20) définie extérieurement par les éléments de transport (8) et dans lequel une zone de transfert (23) est définie entre le premier mécanisme de transport (6) et le deuxième mécanisme de transport (24), dans lequel le deuxième mécanisme de transport (24) est disposé, vu en section transversale, en dessous du deuxième axe de renvoi (14) du deuxième dispositif de renvoi (13) ainsi qu'à l'extérieur de l'enveloppe (20) définie extérieurement par les éléments de transport (8), et
- un élément de support (27), cet élément de support (27) étant disposé en dessous du brin inférieur (17) de l'au moins un organe de transport à circulation sans fin (7) et s'étendant entre le premier carter de transport (21) et le deuxième carter de transport (22), définissant ainsi une section de retour (26) s'étendant entre les deux zones d'extrémité de tête (9, 10),
**caractérisée en ce que**
le deuxième mécanisme de transport (24) est logé dans une section de carter (25) en forme d'auge du deuxième carter de transport (22).

2. Unité de démêlage (1) selon la revendication 1, **caractérisée en ce que** le deuxième mécanisme de transport (24) présente, au moins le long de la largeur de transport (18), une orientation parallèle par rapport au deuxième axe de renvoi (14).

3. Unité de démêlage (1) selon l'une des revendications précédentes, **caractérisée en ce que** la section de carter (25) en forme d'auge est munie d'une pluralité d'ouvertures (30) et les ouvertures (30) débouchent dans un canal d'aspiration (31) et le canal d'aspiration (31) est en liaison fluidique avec un dispositif d'aspiration (29).

4. Unité de démêlage (1) selon l'une des revendications précédentes, **caractérisée en ce que** le premier carter de transport (21) et le deuxième carter de transport (22) sont respectivement disposés extérieurement et latéralement en saillie sur la zone d'évacuation (5) située côté fond du dispositif de réception (3) conçu en forme de puits ou d'entonnoir.

5. Unité de démêlage (1) selon l'une des revendications précédentes, **caractérisée en ce qu'**un élément coulissant (28) est prévu, cet élément coulissant (28) étant disposé dans la zone d'évacuation (5) depuis le dispositif de réception (3) jusque dans la deuxième zone d'extrémité de tête (10) au-dessus du brin supérieur (16) de l'au moins un organe de transport à circulation sans fin (7) et étant réglable en position selon les besoins par rapport au brin supérieur (16) pour ajuster une section de passage libre.

6. Unité de démêlage (1) selon l'une des revendications précédentes, **caractérisée en ce que** le premier mécanisme de transport (6) comprend au moins deux organes de transport à circulation (7) qui sont disposés à distance l'un de l'autre dans le sens de la largeur de transport (18).

7. Unité de démêlage (1) selon l'une des revendications précédentes, **caractérisée en ce que** les éléments de transport (8) sont plus particulièrement conçus en forme de barre et s'étendent de manière continue sur la largeur de transport (18).

8. Unité de démêlage (1) selon l'une des revendications précédentes, **caractérisée en ce que** les éléments de transport (8), plus particulièrement conçus en forme de barre, sont supportés sur une unité de support (19) conçue en forme de table et chacun des organes de transport à circulation (7) est respectivement logé dans un canal ou dans une fente disposé(e) ou formé(e) dans l'unité de support (19).

9. Unité de démêlage (1) selon l'une des revendications précédentes, **caractérisée en ce qu'**un dispositif de remplissage (32) est prévu, ce dispositif de remplissage (32) étant disposé dans la zone de transfert (23) de la deuxième zone d'extrémité de tête (10) ainsi qu'au-dessus du deuxième mécanisme de transport (24).

10. Unité de démêlage (1) selon la revendication 9, **caractérisée en ce que** le dispositif de remplissage (32) est disposé latéralement à côté du deuxième dispositif de renvoi (13), vu dans le sens du transport du deuxième mécanisme de transport (24).

11. Unité de démêlage (1) selon la revendication 9 ou 10, **caractérisée en ce que** le dispositif de remplissage (32) comprend au moins un corps de roulement (33) monté de manière rotative et le corps de roulement (33) est en liaison d'entraînement avec un moyen d'entraînement (34).

12. Unité de démêlage (1) selon l'une des revendications précédentes, **caractérisée en ce que** le deuxième mécanisme de transport (24) est sélectionné dans le groupe comprenant un convoyeur à vis sans fin, un convoyeur tubulaire, un convoyeur à chaîne tubulaire ou un convoyeur à câble tubulaire.

13. Procédé de démêlage d'une quantité totale de matériau en vrac (2) emmêlé, plus particulièrement d'un matériau broyé ou haché, de paille ou de foin raccourci, en des sous-quantités plus petites, plus particulièrement en utilisant l'unité de démêlage (1) selon l'une des revendications précédentes, dans lequel les étapes suivantes sont réalisées :
- mise à disposition du matériau en vrac (2) à démêler,
- mise à disposition d'un dispositif de réception (3), ce dispositif de réception (3) étant conçu en forme de puits ou d'entonnoir et duquel sont définies une zone d'alimentation (4) et une zone d'évacuation (5) située côté fond,
- mise à disposition d'un premier mécanisme de transport (6), ce premier mécanisme de transport (6) étant disposé dans la zone d'évacuation (5) et comprenant au moins un organe de transport à circulation sans fin (7) avec des éléments de transport (8) disposés sur celui-ci, dans lequel l'au moins un organe de transport (7) est respectivement dévié au niveau d'une première zone d'extrémité de tête (9) sur un premier dispositif de renvoi (11) avec un premier axe de renvoi (12) et d'une deuxième zone d'extrémité de tête (10) disposée à distance dans le sens du transport sur un deuxième dispositif de renvoi (13) avec un deuxième axe de renvoi (14), dans lequel l'un des dispositifs de renvoi (11, 13) est entraîné par un dispositif d'entraînement (15), et un brin supérieur (16) et un brin inférieur (17) sont définis par l'au moins un organe de transport (7), et une enveloppe (20) de forme circonférentielle avec une largeur de transport (18) est en outre définie extérieurement par les éléments de transport (8),
- mise à disposition d'un premier carter de transport (21), ce premier carter de transport (21) étant disposé dans la première zone d'extrémité de tête (9) et recouvrant le premier dispositif de renvoi (11),
- mise à disposition d'un deuxième carter de transport (22), ce deuxième carter de transport (22) étant disposé dans la deuxième zone d'extrémité de tête (10) et recouvrant le deuxième dispositif de renvoi (13),
- mise à disposition d'un deuxième mécanisme de transport (24), ce deuxième mécanisme de transport (24) étant disposé dans la deuxième zone d'extrémité de tête (10) et s'étendant au moins le long de la largeur de transport (18),
- dans lequel le deuxième mécanisme de transport (24) est logé et disposé à l'intérieur du deuxième carter de transport (22) et est disposé dans une zone située en dessous du deuxième axe de renvoi (14) du deuxième dispositif de renvoi (13) ainsi qu'à l'extérieur de l'enveloppe (20) définie extérieurement par les éléments de transport (8), et dans lequel une zone de transfert (23) est définie entre le premier mécanisme de transport (6) et le deuxième mécanisme de transport (24), dans lequel le deuxième mécanisme de transport (24) est disposé, vu en section transversale, en dessous du deuxième axe de renvoi (14) du deuxième dispositif de renvoi (13) ainsi qu'à l'extérieur de l'enveloppe (20) définie extérieurement par les éléments de transport (8),
- mise à disposition d'un élément de support (27), cet élément de support (27) étant disposé en dessous du brin inférieur (17) de l'au moins un organe de transport à circulation sans fin (7) et s'étendant entre le premier carter de transport (21) et le deuxième carter de transport (22), et par lequel est définie une section de retour (26) s'étendant entre les deux zones d'extrémité de tête (9, 10),
- introduction de la quantité totale du matériau en vrac (2) à démêler dans le dispositif de réception (3) jusqu'à sa zone d'évacuation (5),
- introduction des sous-quantités individuelles du matériau en vrac (2) au moyen du premier mécanisme de transport (6) depuis la zone d'évacuation (5) jusque dans la deuxième zone d'extrémité de tête (10) et transfert des sous-quantités individuelles du matériau en vrac (2) dans la zone de transfert (23) vers le deuxième mécanisme de transport (24), et
- évacuation d'une quantité de transport du matériau en vrac (2) transféré au moyen du deuxième mécanisme de transport (24) depuis la zone de transfert (23) vers un poste de distribution,
**caractérisé en ce que** le deuxième mécanisme de transport (24) est logé dans une section de carter (25) en forme d'auge du deuxième carter de transport (22).

14. Procédé selon la revendication 13, **caractérisé en ce que** l'introduction des sous-quantités individuelles du matériau en vrac (2) est effectuée de manière continue ou discontinue.

15. Procédé selon la revendication 13 ou 14, **caractérisé en ce que** l'évacuation de la quantité de transport du matériau en vrac (2) transféré est effectuée de manière continue ou discontinue.

16. Procédé selon l'une des revendications 13 à 15, **caractérisé en ce que**, en cas de passage en dessous de la quantité de transport évacuée par rapport aux sous-quantités introduites dans la même unité de temps, une quantité différentielle du matériau en vrac (2) restant dans la zone de transfert (23) est renvoyée, au moyen des éléments de transport (8) disposés sur l'au moins un organe de transport à circulation (7) le long de la section de retour (26), vers la première zone d'extrémité de tête (9) et plus loin vers la zone d'évacuation (5) du dispositif de réception (3).

17. Procédé selon l'une des revendications 13 à 16, **caractérisé en ce que** la section de carter (25) en forme d'auge est munie d'une pluralité d'ouvertures (30) et **en ce que** les ouvertures (30) débouchent dans un canal d'aspiration (31) en liaison fluidique avec un dispositif d'aspiration (29) et **en ce que**, au moyen du dispositif d'aspiration (29), les particules du matériau en vrac (2) qui ont pénétré dans le canal d'aspiration (31) sont aspirées à travers les ouvertures (30).

18. Procédé selon l'une des revendications 13 à 17, **caractérisé en ce qu'**un dispositif de remplissage (32) est mis à disposition, lequel dispositif de remplissage (32) est disposé dans la zone de transfert (23) de la deuxième zone d'extrémité de tête (10) ainsi qu'au-dessus du deuxième mécanisme de transport (24).

19. Procédé selon la revendication 18, **caractérisé en ce que** le dispositif de remplissage (32) est disposé latéralement à côté du deuxième dispositif de renvoi (13), vu dans le sens du transport du deuxième mécanisme de transport (24), et au moyen du dispositif de remplissage (32), le deuxième mécanisme de transport (24) est rempli avec les sous-quantités du matériau en vrac (2) se trouvant dans la zone de transfert (23) pour l'évacuation depuis la zone de transfert (23).
